# EUROPEAN PATENT SPECIFICATION

(11) **EP 0 278 717 B1**
(45) Date of publication and mention of the grant of the patent: **15.12.1993**
(21) Application number: 88301036.5
(22) Date of filing: 08.02.1988
(51) Int. Cl.: B64D 11/00, G07C 3/00, H04N 7/173

(54) **Passenger vehicle polling systems and methods**
Abfragesysteme und -methoden für Passagierfahrzeuge
Systèmes et méthodes d'interrogation pour véhicules à passagers

(30) Priority: 10.02.1987 JP 29353/87; 04.03.1987 JP 49818/87
(43) Date of publication of application: 17.08.1988
(73) Proprietor: SONY CORPORATION, Tokyo 141 (JP)
(72) Inventor: Matsuzaki, Atsushi c/o Patent Division, Shinagawa-ku Tokyo 141 (JP); Tagawa, Koichi c/o Patent Division, Shinagawa-ku Tokyo 141 (JP); Yamashita, Masami c/o Patent Division, Shinagawa-ku Tokyo 141 (JP); Kondo, Yoshiyuki c/o Patent Division, Shinagawa-ku Tokyo 141 (JP)
(74) Representative: Pilch, Adam John Michael

(56) References cited:
- EP-A- 0 230 280
- DE-A- 3 426 893
- GB-A- 1 296 405
- GB-A- 2 135 182
- US-A- 4 361 903
- US-A- 4 455 570
- US-A- 4 584 603
- US-A- 4 630 821
- CONTROL ENGINEERING, vol. 18, no. 1, January 1971, pages 57-76; R.L. ARONSON: "Line-sharing systems for plant monitoring and control"

## Description

This invention relates to polling systems and methods for use with passenger vehicles having a plurality of passenger seats.

As is disclosed, for example, in US Patent No.US-A-4584603, it has been proposed that audio/video system terminals be separately mounted on passenger seats of a passenger vehicle, such as an aircraft, to entertain passengers during long duration flights. Aircrafts have also been equipped with service systems including reading lamps, and attendant call lamps or the like, for meeting various requirements of the passengers.

However, in such systems, when the crew are in the crew compartment, they cannot know the status of the passenger seats and the condition of each passenger. Accordingly, when the aircraft is to take off or land, the passenger attendants have to walk about within the passenger cabin in order to confirm whether the passengers are seated, whether the passenger seats have been returned to the upright position from the reclined position, whether the passengers have fastened their seat belts correctly or not, and other such details.

Further, in these systems, it is impossible for the crew in the crew compartment to know which video or audio programme has been selected at each terminal.

DE-A-3 426 893 discloses an aircraft passenger entertainment and information system comprising a central station and a plurality of decoder/encoder units distributed throughout the aircraft connected to seat systems for providing entertainment to the passengers and to passenger monitoring devices for detecting the status of the seat equipment and seat occupation.

According to one aspect of the present invention there is provided a passenger vehicle polling system comprising:
a head end apparatus comprising means for generating a polling command signal and means for centralising polling answer signals generated in response to the polling command signal, each said polling answer signal including a status signal and an address signal identifying one of a plurality of passenger seats;
a plurality of terminal units each provided at a respective passenger seat, each passenger seat having a seat belt and being capable of reclining, each said terminal unit comprising means for decoding said polling command signal, means for generating at least one of said polling answer signals, and a sensor means capable of sensing the status of a respective one of the passenger seats and sending a status signal indicative of the sensed status to the polling answer signal generating means, each said sensor means being operable to sense the status of the seat belt of the corresponding one of the passenger seats, to sense whether the corresponding one of the passenger seats is reclined and to sense whether the corresponding one of the passenger seats is occupied;
means for transmitting the polling command signal from the head end apparatus to the terminal units, and for transmitting each polling answer signal from the terminal unit at which it is generated to the head end apparatus; and
means for transmitting a safety message signal to selected ones of said terminal units in response to the status signals received by said head end apparatus from said terminal units.

According to another aspect of the present invention there is provided a passenger vehicle polling system comprising:
a head end apparatus comprising means for generating a polling command signal, means for centralising polling answer signals generated in response to the polling command signal, means for reproducing video programmes, means for reproducing audio programmes, and means for multiplexing said polling command signal, said video programmes and said audio programmes;
a plurality of terminal units each provided at a respective one of a plurality of passenger seats, each passenger seat having a seat belt and being capable of reclining, each said terminal unit comprising means for receiving said polling command signal, said video programmes, and said audio programmes, means for decoding said polling command signal, means for generating at least one of said polling answer signals in response to said polling command signal, means for generating an address signal identifying one of the passenger seats and for supplying the address signal to said polling answer signal generating means, means for selecting desired ones of said video programmes and said audio programmes and for supplying a signal indicative of the selected ones of the video programmes and audio programmes to the polling answer signal generating means, means for sensing the status of one of the passenger seats and for supplying a signal indicative of the status of said one of the passenger seats to said polling answer signal generating means, each said sensing means being operable to sense the status of the seat belt of the corresponding one of the passenger seats, to sense whether the corresponding one of the passenger seats is reclined and to sense whether the corresponding one of the passenger seats is occupied, display means for displaying the selected video programmes, and an audio output terminal for receiving the selected audio programmes;
means for transmitting signals between said head end apparatus and said plurality of terminal units; and
means for transmitting a safety message signal to selected ones of said terminal units in response to the status signals received by said head end apparatus from said terminal units.

According to a further aspect of the present invention there is provided passenger vehicle polling method including the steps of:
generating a polling command signal at a head end apparatus in a passenger vehicle;
transmitting the polling command signal from the head end apparatus to each of a plurality of terminal units, each terminal unit being located at a respective one of a plurality of passenger seats in the passenger vehicle, each passenger seat comprising a seat belt and being capable of reclining;
at each terminal unit, decoding said polling command signal, sensing at each terminal unit the status of one of said seat belts, sensing at each terminal unit whether one of said passenger seats is reclined, sensing at each terminal unit whether one of said passenger seats is occupied, generating in response to the decoded polling command signal a polling answer signal including an address signal identifying one of the passenger seats and a status signal indicative of the status of one of the passenger seats, the sensed seat belt status, the sensed seat reclined status and the sensed seat occupation status;
transmitting said polling answer signals to the head end apparatus; and transmitting a safety message signal to selected ones of said terminal units in response to the status signals received by said head end apparatus from said terminal units.

A preferred embodiment of the present invention, to be described in greater detail hereinafter, may be installed in a passenger vehicle having a plurality of passenger seats, as a result of which the system relieves the workload of the passenger attendants, and provides a polling system capable of urging one or more of the passengers to perform specified actions such as to fasten their seat belts immediately.

The polling system is preferably combined as a unit with an audio/video system so that the combined system can provide improved service and entertainment for its users with a unified and simplified overall system arrangement.

The invention will now be described by way of example with reference to the accompanying drawings, throughout which like parts are referred to by like references, and in which:
Figure 1 is a block diagram showing a polling system according to a preferred embodiment of the present invention;
Figure 2 is an enlarged front view of a front panel of selection and display apparatus forming part of Figure 1;
Figure 3 is a front view of two units of the selection indicating apparatus shown in Figure 2, each mounted on the back of a different passenger seat;
Figure 4 is a block diagram of another preferred embodiment of the invention;
Figures 5A to 5C and 6A to 6D are diagrams showing signal formats used in embodiments of the invention; and
Figure 7 is a perspective view of the interior of an aircraft equipped with a preferred embodiment of the invention.

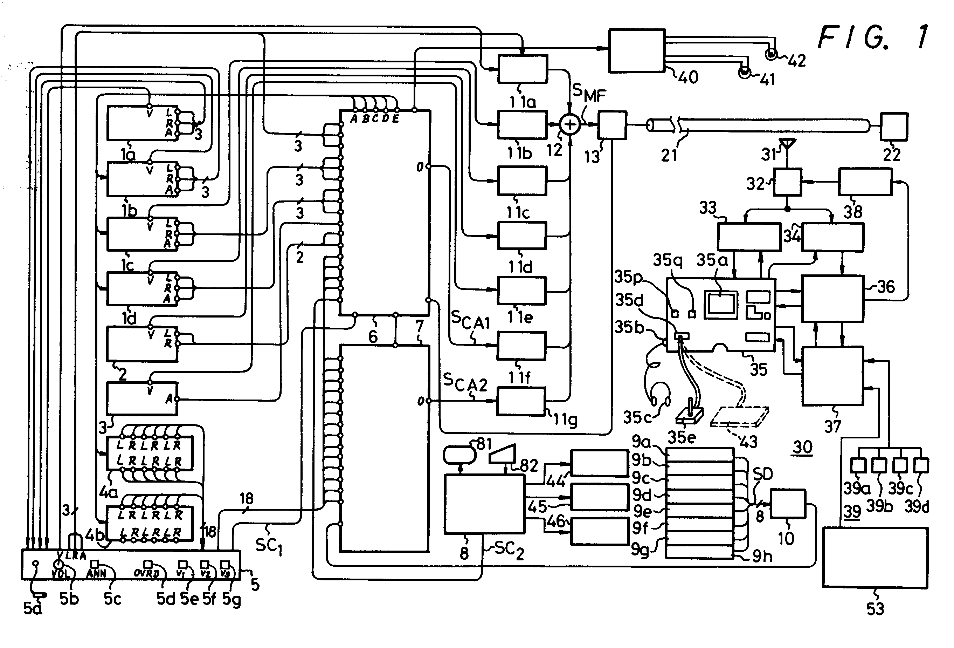

A polling system according to an embodiment of the present invention is shown in Figure 1, the system being capable of transmission of messages, video signals, audio signals, and other signals in an aircraft or other vehicle.

The "transmitting side" (also referred to as the "central control portion", "central control unit" or "head end apparatus") of the system will first be described with reference to Figure 1.

Referring to Figure 1, video tape recorders (VTRs) 1a to 1d are provided in the transmitting side which may, for example, be located in an aircraft crew's compartment. The VTR 1a is used for an override operation and may be located with a cassette tape explaining, for example, how to put on a life-jacket. Each of the VTRs 1b to 1d is loaded with a cassette tape of a video programme such as a film. Each of the VTRs 1a to 1d is provided with a terminal V for outputting a reproduced video signal and with terminals L, R and A for outputting reproduced audio signals. In an embodiment in which the VTRs 1a to 1d store bi-lingual programmes, the terminals L and R are respectively used for outputting left-channel and right-channel stereo audio signals in a first language, and the terminal A is used for outputting a monaural audio signal in a second language.

A television tuner 2 is provided with a terminal V for outputting a video signal and terminals L and R for outputting respectively the left and right channels of an audio signal.

Still picture reproducing apparatus 3 is capable of reproducing still picture information recorded on a compact disc (CD) read only memory (ROM), the information typically comprising maps, an airport guiding drawing, or the like. The still picture reproducing apparatus 3 is provided with a terminal V for outputting a video signal representative of a still picture and a terminal A for outputting an audio signal associated with the still picture.

Audio reproducing apparatus 4a and 4b each include three sets of compact disc players and tape recorders. The audio reproducing apparatus 4a, 4b are each respectively provided with six pairs of terminals L and R for outputting left channel and right channel audio signals.

A controller 5 comprises a microphone 5a, a volume control 5b for adjusting the level of an audio signal received by the microphone 5a, an announce key 5c, an override key 5d and pause keys 5e to 5g for setting the VTRs 1b to 1d into a pause mode. Video signals from the respective terminals V of the VTRs 1a, 1b and audio signals from the respective terminals L, R and A of these recorders are supplied to the controller 5. The controller 5 is provided with a terminal V for outputting a video signal and terminals L, R and A for outputting audio signals. Usually, the terminals V, L, R and A of the controller 5 output the video signal supplied from the terminal V of the VTR 1b and the audio signals supplied from the terminals L, R and A of the VTR 1b. However, when the override key 5d is pressed to trigger an override operation, the terminals V, L, R and A of the controller 5 output the video signal supplied from the terminal V of the VTR 1a and the audio signals supplied from the terminals L, R and A of the VTR 1a. When the announce key 5c is pressed to initiate an announce operation, an audio signal from the microphone 5a is delivered to the output terminal A of the controller 5.

The system also includes CADA encoders 6 and 7 which are of the type used in the so-called cable digital audio/data transmission system (CADA system), for example as disclosed in US Patent No. US-A-4 684 981. The CADA encoders 6, 7 are capable of time-division-multiplexing a plurality of digital audio and data signals and transmitting the multiplexed signals over a vacant one channel band width (6 MHz) of a cable television (CATV) system, thus transmitting signals such as music with high efficiency and without degrading their quality. Each of the CADA encoders 6 and 7 is provided with an A/D (analog-to-digital) converter and a shift register (not shown). The time-division-multiplexing operation is carried out by converting a plurality of audio signals into digital signals in the A/D converter, inputting the digital signals in parallel to the shift register at predetermined locations, and then outputting the digital signals from the shift register in series at a high speed. Not only digital audio signals but also control data and data comprising computer software can be multiplexed by the CADA encoders in this manner.

The audio signals delivered to the output terminals L, R and A of the controller 5 are supplied to the encoder 6. The audio signals delivered to the output terminals L, R and A of the VTRs 1c and 1d are also supplied to the encoder 6. The audio signals delivered to the output terminals L and R of the tuner 2 and the output terminal A of the still picture reproducing apparatus 3 are also supplied to the encoder 6. The audio signals delivered to the six pairs of output terminals L and R of the audio reproducing apparatus 4a and to the six pairs of output terminals L and R of the audio reproducing apparatus 4b are supplied to the encoders 6 and 7 through the controller 5.

When one of the override key 5d, the announce key 5c, and the pause keys 5e to 5g of the controller 5 is pressed, the controller 5 generates control data SC₁ having contents corresponding to the pressed key. The control data SC₁ is supplied to the encoder 6.

The encoder 6 has output terminals A to E from each of which a pause control signal is output in response to the control data SC₁. The VTRs 1b to 1d and the audio reproducing apparatus 4a and 4b are respectively controlled by the pause signals delivered from the terminals A to E of the encoder 6. More specifically, when the override key 5d and the announce key 5c are pressed, the pause control signal is output from all of the terminals A to E, so that the VTRs 1b to 1d and the audio reproducing apparatus 4a and 4b all enter a pause mode. When the pause keys 5e to 5g are pressed, pause control signals are output from the output terminals A to C, placing the respective VTRs 1b to 1d into a pause mode.

A master controller 8 is provided, comprising a computer (not shown) which controls the overall system, and which is preferably located in the cabin of the aircraft. The master controller 8 is connected to a display 81 and a keyboard 82. The master controller 8 generates control data SC₂ (for controlling one or more terminal apparatus units located in the receiving side of the system) in response to a command from the keyboard 82 and supplies control data SC₂ to the encoder 6. The control data SC₂ may be, for example, data for controlling the luminance of a display in the terminal apparatus, or data for polling the conditions of each passenger seat at which a terminal apparatus is located. The data can be monitored by the display 81 connected to the master controller 8.

Menu data is written in a ROM 9a, and a different set of game data is written in each of ROMs 9b to 9h. Each data signal SD read out from the ROMs 9a to 9h (for example, for use with computer software) is supplied to a signal processing circuit 10 in which, for example, an error correcting code may be added, and is supplied to the encoder 7 thereafter.

Control data signals SC₁ and SC₂ are also supplied to the encoder 7 from the encoder 6.

A time-division-multiplexed signal S_{CA1} appears at an output terminal 0 of the encoder 6. The signal S_{CA1} includes the plurality of digitally converted audio signals generated in the encoder 6, and the control data SC₁ and SC₂ supplied to the encoder 6. The signal S_{CA1} is supplied to a modulator 11f to be amplitude-modulated, preferably by a VSB (vestigial sideband) system.

A time-division-multiplexed signal S_{CA2} appears at an output terminal 0 of the encoder 7. The signal S_{CA2} includes the plurality of digitally converted audio signals generated in the encoder 7, the control data (SC₁ and SC₂) and the signal SD supplied to the encoder 7. The signal S_{CA2} is supplied to a modulator 11g to be amplitude-modulated, preferably by a VSB system.

The video signal delivered to the output terminal V of the controller 5 is supplied to a modulator 11a. The audio signal delivered to the terminal A of the controller 5 is supplied both to the modulator 11a and to the encoder 6. In the modulator 11a, an ordinary television signal is generated by frequency modulating the audio signal and frequency-multiplexing the frequency modulated audio signal with the video signal. This television signal is thereafter amplitude-modulated, preferably by a VSB signal.

The video signals delivered to the respective output terminals V of the VTRs 1c, 1d, the tuner 2, and the still picture reproducing apparatus 3 are respectively supplied to modulators 11b to 11e to be amplitude-modulated, preferably by a VSB system.

The modulators 11a to 11g modulate the signals supplied thereto in frequency bands chosen so as to prevent cross modulation, such as in every other channel above the sixty channels of the television broadcasting band.

Output signals from the modulators 11a to 11g are supplied to an adder 12 in which they are frequency-multiplexed. The frequency multiplexed signal S_{MF} from the adder 12 is supplied through a signal distributor 13 to one end of a cable 21. The cable 21 serves as a bi-directional signal transmission means. The other end of the cable 21 terminates at a terminal resistor 22. A coaxial cable whose periphery is spirally indented so as to leak a large proportion of transmitted signals is suitable for use as the cable 21.

The receiving side of the system will next be described.

Figure 1 shows a terminal apparatus unit 30, of the type that preferably is to be mounted on the back of each of a plurality of passenger seats in an aircraft. Although only one terminal apparatus unit 30 is illustrated in Figure 1, there will preferably be the same number of terminal units 30 as there are passenger seats in the aircraft. Each terminal apparatus unit 30 is provided with an antenna 31 which receives the frequency multiplexed signal S_{MF} leaking from the cable 21. The frequency-multiplexed signal S_{MF} received at the antenna 31 is supplied through a signal distributor 32 to a television tuner 33 and a CADA tuner 34. The tuner 33 is capable of selectively receiving channels in the output frequency bands of the modulators 11a to 11e, while the tuner 34 is capable of selectively receiving channels in the output frequency bands of the modulators 11f and 11g. The tuners 33 and 34 are controlled in their channel selections by a selection and display apparatus 35.

Video and audio signals produced by the tuner 33 are supplied to the selection and display apparatus 35, and the time-division-multiplexed signal S_{CA1} or S_{CA2} produced by the tuner 34 is supplied to a CADA decoder 36. The CADA decoder 36 is constructed so as to effect substantially the inverse operations to those performed in the CADA encoders 6 and 7. More specifically, the CADA decoder 36 decodes the time-division-multiplexed signal S_{CA1} (or S_{CA2}) or CADA data, produces a desired demultiplexed signal, and supplies the same to the selection and display apparatus 35 or to a personal computer 37. The decoder 36 is provided with a shift register and a D/A converter (not shown). The time-division-multiplexed signals S_{CA1} and S_{CA2} are serially input to the shift register of the decoder 36. The control data SC₁ or SC₂ is extracted in parallel form at a predetermined location in the shift register. The desired audio signal and computer software data signal SD are also extracted in parallel form at predetermined locations in the shift register, in response to control signals from the selection and display apparatus 35. The audio signal is converted into an analog signal by the D/A converter. The decoder 36 requires a pair of D/A converters respectively for the left channel and right channel of a stereo audio signal. The audio signals emerging from the decoder 36 are supplied to the selection and display apparatus 35. The computer software data SD is supplied to the personal computer 37 and written into a random access memory (RAM) therein. An embodiment of the decoder 36 is described in the above-mentioned US Patent No. US-A-4 684 981.

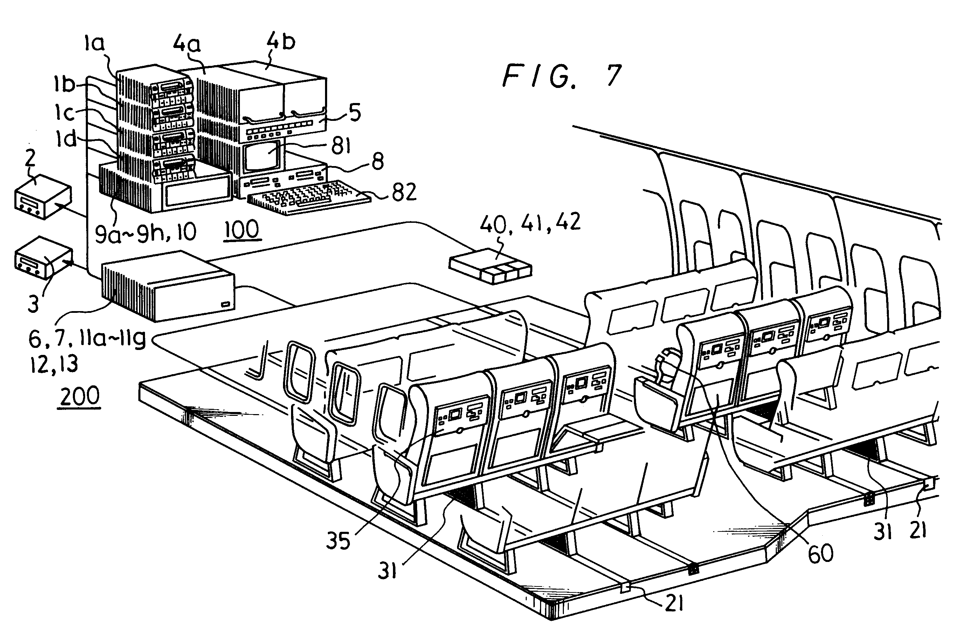

A sensor unit 39 is provided to sense the status of each of the passenger seats and the condition of a passenger seated thereon. The sensor unit 39 may include a sensor 39a for sensing whether or not a passenger is seated in the corresponding passenger seat, a sensor 39b for sensing whether a reclinable passenger seat is oriented in a reclining position or an upright position, a sensor 39c for sensing whether or not the passenger has correctly fastened his or her seat belt 60 (as shown in Figure 7) and a sensor 39d for sensing the location of the passenger seat or the like. The sensors 39a to 39d may each include a microswitch, a contactless switch, a pressure switch, a semiconductor strain gauge, a photosensor, or the like.

An address generator 53 is also provided in each terminal unit 30 for providing address data to the CADA decoder 36.

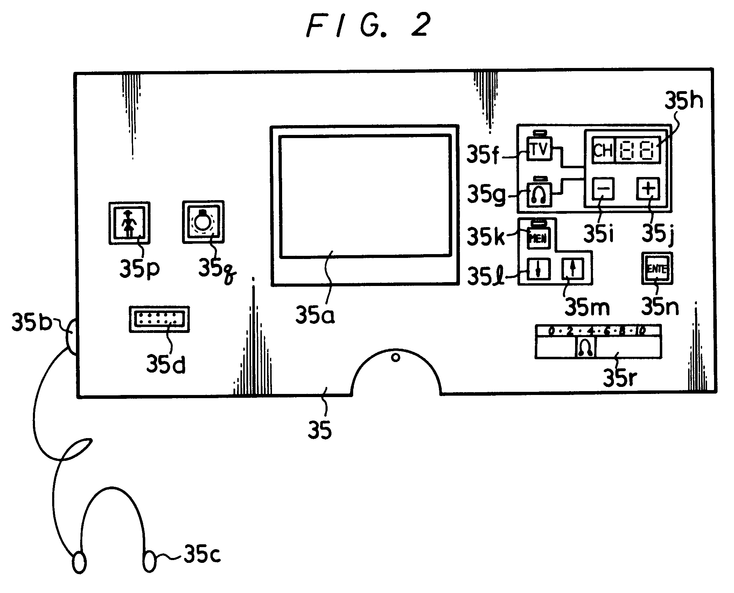

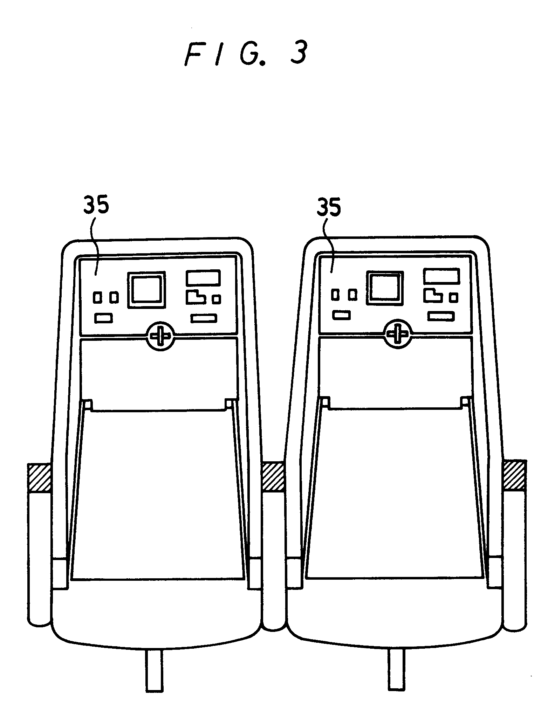

Figure 2 is an example of a preferred arrangement of the panel of the selection and display apparatus 35. The panel of the selection and display apparatus 35 may be mounted on the back of a passenger seat, as shown in Figure 3.

Figure 2 shows a display 35a, which may comprise a flat cathode ray tube or an LCD (liquid crystal display) or the like, an audio output terminal 35b for connecting a pair of headphones 35c thereto, and a game terminal 35d for connecting a joy stick 35e (shown in Figure 1), a keyboard 43 (indicated by dashed lines in Figure 1) or the like for playing games.

Further, the selection and display apparatus 35 is provided with a television selecting key 35f, a music selecting key 35g, a channel display 35h, a channel-down key 35i and a channel-up key 35j.

The television channel can be sequentially changed by first pressing the television selecting key 35f and then pressing the channel-down key 35i or the channel-up key 35j. Thus, when the channel received by the television tuner 33 is changed sequentially, the display 35a sequentially displays images reproduced from the video signals derived from the VTRs 1b to 1d, the tuner 2 and the still picture reproducing apparatus 3, and corresponding audio signals from the CADA decoder 36 are output to the audio output terminal 35b. When the audio signal is bi-lingual, two audio channels are assigned for one video display. A first language is supplied from the first channel, and a second language from the second channel.

The music channel can be sequentially changed by first pressing the music selecting key 35g and then pressing the channel-down key 35i or the channel-up key 35j. In this manner, the audio signal output from the CADA decoder 36 is changed, and the audio signals output from the audio reproducing apparatus 4a and 4b are sequentially supplied to the audio signal output terminal 35b.

The selection and display apparatus 35 is also provided with a menu display key 35k, a cursor-down key 35l, a cursor-up key 35m and an enter key 35n. By pressing the menu key 35k, a video signal based on data from the menu ROM 9a is supplied to the selection and display apparatus 35 from the personal computer 37 and a menu is displayed on the display 35a.

By pressing the enter key 35n after selecting a game by moving a cursor on the display with the cursor-down key 35l or the cursor-up key 35m, a video signal and an audio signal based on data of the selected game from the game ROMs 9b to 9h are supplied from the personal computer 37 to the selection and display apparatus 35. Then, the game is displayed on the display 35a and the game sound signal is supplied to the audio output terminal 35b.

The selection and display apparatus 35 also includes an attendant call key 35p, a reading light key 35q and a volume control 35r.

The selection and display apparatus 35 (also referred to herein as "selection indicating apparatus 35") is controlled by a central processing unit (CPU) (not shown) in the CADA decoder 36 on the basis of the control data SC₁, SC₂ extracted by the CADA decoder 36.

If the override key 5d of the controller 5 is pressed to initiate an override operation while passengers are watching a film on the display 35a or listening to music, the tuner 33 is forced to receive the frequency channel having the output frequency band of the modulator 11a, the display 35a of the selection indicating apparatus 35 is forced to display an image reproduced from the video signal output to the terminal V of the VTR 1a, and the audio output terminal 35b is forced to output the audio signal supplied to the output terminal A of the VTR 1a.

When the announce key 5c of the controller 5 is pressed to initiate an announce operation, the tuner 33 is forced to receive the frequency channel having the output frequency band of the modulator 11a, and the audio output terminal 35b is forced to output the audio signal from the microphone 5a. In this event, the video signal is muted so that the display 35a does not display any image. Further, any one of the television selecting key 35f, the music selecting key 35g, the channel-down key 35i, the channel-up key 35j and the volume control 35r, or all of them, are disabled (prevented from operating). Additionally, the audio volume to all terminal units may be caused to be uniform.

When the CADA encoder 6 or 7 ceases to function, due to a malfunction for example, the control data SC₁ supplied to the selection indicating apparatus 35 is the same as that indicating initiation of an override operation, so that the selection indicating apparatus 35 is forced into the same mode of operation as in the override mode.

When an override operation is effected while a passenger is playing a game on the terminal display 35a, the personal computer 37 is temporarily prohibited from executing the game. Also in this case, all or some of the functions of the apparatus 35 may be disabled, such as channel selection and volume adjustment by the television selecting key 35f, the music selecting key 35g and similar.

When the override key 5d or the announce key 5c is pressed a second time to terminate the override operation or the announce operation, the selection and display apparatus 35 is released from the override condition and automatically returned to its condition as of initiation of the override or announce operation. More specifically, the VTRs 1b to 1d and the audio reproducing apparatus 4a and 4b are automatically released from the pause state and set into the reproducing mode. The terminal units 30 are also returned to their selected conditions as of the initiation of the override or announce operation, so that reproduction of the video signal and the audio signal resumes from the respective interrupted points. Thus, the passengers can view a complete film or listen to a complete musical programme without missing any scene of the film or any part of the music. If the override or announcement operation had interrupted a game, the personal computer 37 resumes its execution, so that playing of the game may resume.

When the selection state is overriden (forced into a condition) as described above, the channel display 35h displays a signal indicative of the forced condition. The selection and display apparatus 35 may optionally include an additional display means for this indication.

The brightness of the display 35a is automatically controlled in response to the appropriate control data SC₂, for example, in such a manner that the brightness of the display 35a corresponds to the brightness of the cabin.

When the master control unit 8 generates control data SC₂ requesting transmission of data from one or more of the units 30 (namely a "polling command signal"), such as data indicative of which video signal, audio signal, or television game software has been selected by such unit or units, the CPU within the CADA decoder 36 of each relevant unit 30 generates the requested data, which may be indicative of which of the keys 35f, 35g, and 35k has been actuated, and which channel has been selected (when the key 35f or 35g is actuated) or which television game has been selected (when the key 35k is actuated). The requested data is supplied to a transmitter 38, together with address data from the address generator 53, to be modulated to a frequency outside the frequency bands of the modulators 11a to 11g. Then, the modulated data is supplied through the signal distributor 32 and the antenna 31 to the cable 21. The data is next supplied from the cable 21 through the signal distributor 13 to the CADA encoder 6 from which the data is supplied to the master controller 8 to be utilised, for example to calculate an audience rating, or a utilisation rating.

The signals indicative of the "selection status" of each terminal unit (that is, the data described in the preceding paragraph) may be monitored on the monitor display 81.

If the control data SC₂ is a polling command signal that requests information on the status of each passenger seat, the CPU (not shown) within each CADA decoder 36 produces the requested data, which may be indicative of the status of each seat belt, or of the reclining state of each passenger seat as sensed by the sensor unit 39. This data is supplied to the head end apparatus in the same manner (described in the two preceding paragraphs) as is the data indicative of the selection status of the terminal units for processing and monitoring by the head end apparatus.

If the sensor unit 39 detects that the passenger on a certain passenger seat has not fastened his or her seat belt 60 (shown in Figure 7), and this information is transmitted to the head end apparatus, an announcement from the microphone 5a or a signal reproduced by the VTR 1a may be transmitted only to that passenger as a message by which that passenger is urged to fasten his or her seat belt 60.

In an embodiment in which each terminal unit 30 (except for the antenna 31, the headphones 35c, and the joystick 35e) is inserted into the back of a passenger seat, each selection and display apparatus 35 is provided at the rear of one of the seats. In this embodiment, each selection and display apparatus 35 mounted in a seat in the first row is used by a passenger seated in the second row, and so on. However, the sensor unit 39 connected with a terminal unit 30 mounted in a passenger set in the first row may sense the condition of the passenger seat located in the first row. Thus, the passenger seat sensed by the sensor unit 39 and the passenger using the terminal unit 30 connected to the sensor unit need not correspond.

Accordingly, when the detected output from the sensor unit 39 is transmitted through the terminal unit 30 to the head end apparatus, any incorrect passenger seat number may be corrected by the terminal unit 30, and the corrected passenger seat number and the detected output from the sensor unit 39 may then be transmitted to the head end apparatus. Alternatively, any incorrect passenger seat number may be corrected by the master controller 8.

Since, as described above, the status of each passenger seat or the condition of the passenger on that seat may be detected and the detected output transmitted to the head end apparatus, it is not necessary for a passenger attendant to move through the cabin to check the status of each passenger seat and the condition of each passenger in the cabin, for example, when the aircraft is taking off or landing. Thus, the attendant's work can be alleviated considerably. Further, since the status of each passenger seat can be quickly checked by entry of an appropriate command on the keyboard 82, the attendant can urge individual passengers to obey specific instructions, such as to fasten their seat belt 60 (see Figure 7) for reasons of safety.

When the attendant call key 35p on the selection indicating apparatus 35 is pressed, control data is generated from the CPU in the associated CADA decoder 36. This control data is supplied to the transmitter 38 to be modulated and is thereafter supplied through the signal distributor 32 and the antenna 31 to the cable 21. Then, the data is supplied from the cable 21 through the signal distributor 13 to the CADA encoder 6. A CPU (not shown) within the CADA encoder 6 controls a switching box 40 on the basis of the data received from the cable 21 so as to light a corresponding attendant call lamp 41.

When the reading light key 35q on the selection indicating apparatus 35 is pressed, control data is generated from the CPU in the associated CADA decoder 36. This control data is supplied to the transmitter 38 to be modulated and thereafter supplied through the signal distributor 32 and the antenna 31 to the cable 21. Then, the data is supplied from the cable 21 through the signal distributor 13 to the CADA encoder 6. The CPU within the CADA encoder 6 controls the switching box 40 on the basis of the data received from the cable 21 so as to turn on or off a corresponding reading lamp 42.

When the keyboard 43 is connected to the game terminal 35d, as shown by dashed lines in Figure 1, the CPU in the CADA decoder 36 generates control data. This control data is supplied to the transmitter 38 to be modulated and thereafter supplied through the signal distributor 32 and the antenna 31 to the cable 21. The data is next supplied from the cable 21 through the signal distributor 13 to the CADA encoder 6 from which the data is supplied to the master controller 8. In response thereto, the master controller 8 supplies the encoders 6 and 7 with a computer program such as a word processor program. The program (which will hereinafter be referred to as a word processor program for specificity) is supplied through the cable 21 to the terminal apparatus unit 30 as a frequency-multiplexed signal and is received by the personal computer 37. When a passenger inputs sentences or the like from the keyboard 43, the sentences or the like are stored in a random access memory (RAM) in the personal computer 37. The display 35a displays the inputted sentences or the like so that the passenger using the word processor can correct the sentences or the like while viewing them on the display 35a. When an instruction indicting the termination of a word processing operation is entered using the keyboard 43, data representing the sentences or the like (converted into ASCII code) stored in the RAM of the personal computer 37 are supplied through the CADA decoder 36 to the transmitter 38 to be modulated, and thereafter are supplied to the cable 21 through the signal distributor 32 and the antenna 31. Then, the data is supplied from the cable 21 through the signal distributor 13 to the CADA encoder 6 from which the data is supplied to the master controller 8. The data representing the sentences or the like may be supplied from the master controller 8 to a disc drive 44 to be recorded, for example on a floppy disc. Otherwise, the data is supplied to a printer 45 which prints the sentences or the like, or to a transmitter 46 to be transmitted to a remote location. The destination of the word processing data is selected by the user by entry of appropriate commands on the keyboard 43. Data indicative of the selected destination is supplied to the master controller 8 together with the word processing data itself. The word processor program may be previously written in the ROM provided in the personal computer 37 and then utilised. Any record generated at the memory unit 44 and any printed record generated at the printer 45 may be delivered to the passenger, such as when the passenger leaves the aircraft.

According to the Figure 1 embodiment, video signals from the VTRs 1a to 1d, the tuner 2 and the still picture reproducing apparatus 3, and audio signals from the VTRs 1a to 1d, the tuner 2, the still picture reproducing apparatus 3 and the audio reproducing apparatus 4a and 4b are time-division-multiplexed by the CADA encoders 6 and 7 which produce the output signals S_{CA1} and S_{CA2}. These output signals S_{CA1} and S_{CA2} from the CADA encoders 6 and 7 are modulated by the modulators 11f and 11g, added together, and added to the signals from the modulators 11a to 11e to form the frequency-multiplexed signal S_{MF}. This frequency-multiplexed signal S_{MF} is supplied to the cable 21, by which it is transmitted to the system's reception side. Each terminal unit 30 at the reception side can select desired signals from the plurality of video, audio, and other signals transmitted as components of the frequency-multiplexed signal S_{MF}, by operation of the selection and display apparatus 35.

Data indicative of actuation of the reading light key 35q and the attendant call key 35p is produced at each terminal unit 30, and is supplied to the transmitter 38 in which it is modulated. The modulated data therefrom is supplied through the signal distributor 32 and the antenna 31 to the cable 21. The data from the cable 21 is supplied through the signal distributor 13 to a CPU (not shown) within the CADA encoder 6, so that the data may be used to generate signals for controlling the reading lamp 42 and the attendant call lamp 41.

The control data SC₂ produced in the master controller 8 (which may be a polling command signal directed to one or more of the terminal units 30) are multiplexed with the audio signals by the CADA encoders 6 and 7 and then fed through the cable 21 to the terminal units 30 at the reception side. In accordance with the control data SC₂, the CPU (not shown) within each CADA decoder 36 produces polling answer data, which may be detected by the sensor unit 39, and which may be indicative of the status of the keys of the relevant selection and display apparatus 35 and indicative of the status of the seat belt 60, the orientation and location of the passenger seat, and the like. This polling answer data is modulated by the transmitter 38 and then supplied through the signal distributor 32 and the antenna 31 to the cable 21. The data comprising the signal from the cable 21 is supplied through the signal distributor 13 to the CADA encoder 6 for encoding, and the data encoded by the CADA encoder 6 is supplied to the master controller 8, in which it may be utilised to calculate an audience rating or the like.

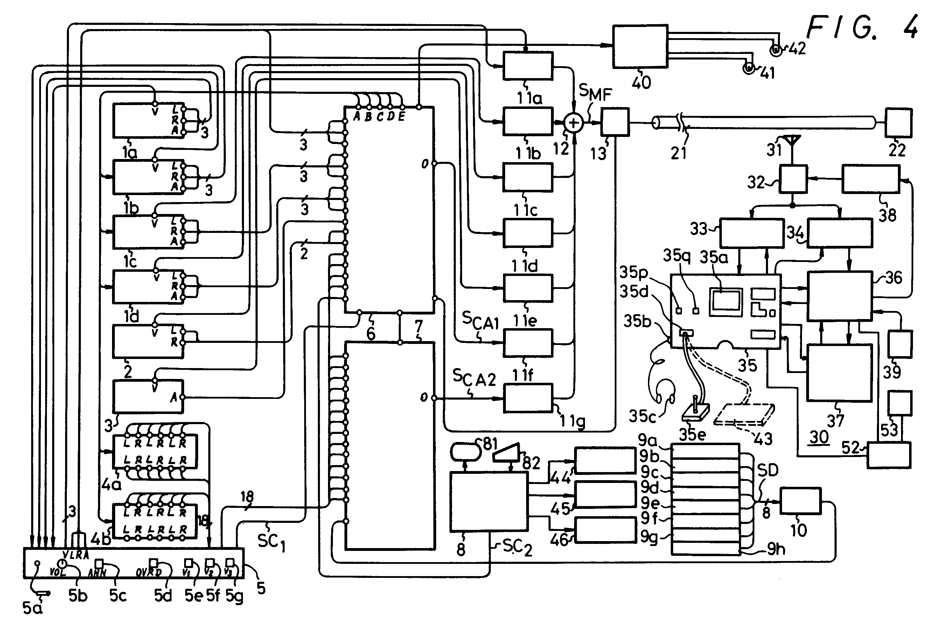

Next, a message delivery system according to another preferred embodiment of the present invention will be described with reference to Figure 4. The system shown in Figure 4 is constructed so as to be able to individually poll each of the plurality of terminal units 30. The components in Figure 4 corresponding to those in Figure 1 are designated by the same reference numerals and explanation thereof will be omitted.

In the Figure 4 embodiment, the master controller 8 generates an address signal corresponding to the terminal unit 30 to be polled by the operating keyboard 82. This address signal and the control data SC₂ are supplied to the CADA encoder 6 and are multiplexed with the control data SC₁ therein. Then, the control data SC₁ and SC₂ and the address signal are supplied to the cable 21 to be transmitted to the receiving side of the system.

The CADA decoder 36 in each terminal unit 30 extracts the address signal from the signals S_{CA1}, S_{CA2} which are supplied from the CADA tuner 34. The address signal extracted by each CADA decoder 36 is supplied to a respective comparator 52 wherein the extracted address signal is compared with an address signal, generated from an address generator 53 including a read-only memory (ROM) or the like provided in each terminal unit 30. The CPU of the CADA decoder 36 is controlled by an output signal from the comparator 52. Only when the address signal extracted by the decoder 36 coincides with the address signal from the address generator 53, will the CADA decoder 36 supply a polling answer signal, which may be indicative of the key operation of the selection and display unit 35 and of the status of the passenger seat, to the transmitter 38 for transmission to the transmitting side as described above.

The rest of the Figure 4 embodiment is constructed and arranged in the same manner as is the Figure 1 embodiment.

In the Figure 4 embodiment, each terminal unit 30 corresponding to a terminal address signal transmitted from the transmitting side is polled, and the other terminal units do not transmit polling answer signals to the head end apparatus. By sequentially changing the terminal address signal supplied from the transmitting side, the terminal units may be sequentially polled.

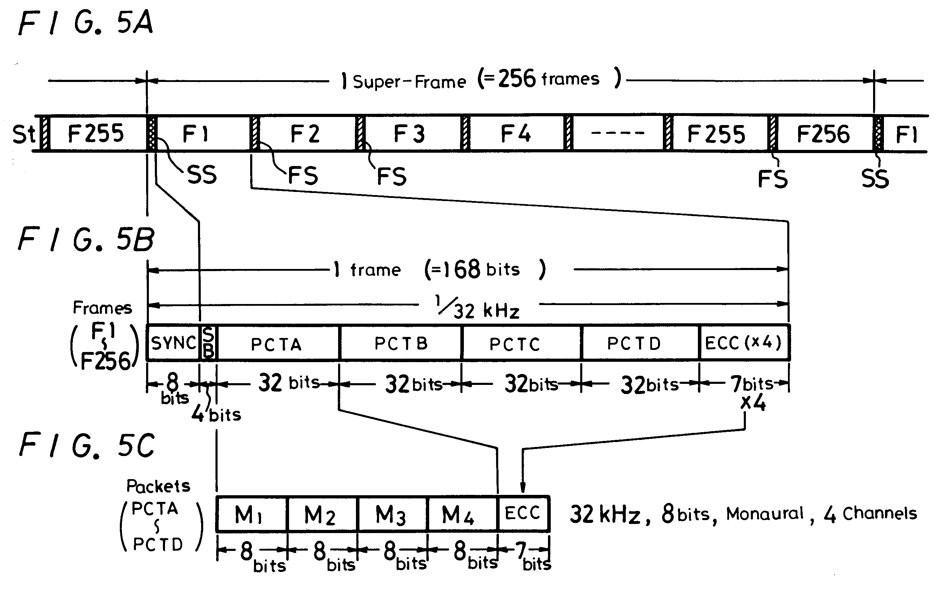

Next, signal formats of the signals S_{CA1} and S_{CA2} will be explained with reference to Figures 5A to 5C. The signal format is an improvement of that disclosed in the aforementioned US Patent No. US-A-4 684 981.

A multiplexed signal St shown in Figure 5A is a serial binary signal formed of a number of super-frames. One super-frame thereof is formed of 256 frames F1 to F256. As shown in Figure 5B, each frame includes 168 bits and the cyclic period of one frame is (32 kHz)⁻¹. Each frame has an 8-bit synchronising code SYNC, followed by a 4-bit service bit SB, followed by four 32-bit data packets PCTA to PCTD, followed by four 7-bit error correcting codes (ECCs).

There are two kinds of synchronising code SYNC as shown in Figure 5A: a super-frame-sync SS for the frame F1 at the head of the super-frame and a frame-sync FS for the subsequent 255 frames F2 to F256. The bit patterns of the super-frame-sync SS and the frame-sync FS are selected to differ from each other.

The service bits SB, the details of which will be provided below, are grouped into four groups each including 77 bits. Each service bit contains data such as a command, a seat number, and the like.

Each of the data packets PCTA to PCTD is formed of 32 bits and is independent of the others. As shown in Figure 5C, each of the packets PCTA to PCTD is divided into four channels M1 to M4, each being formed of 8 bits. Each of the channels M1 to M4 contains a PCM signal obtained by sampling the audio signals, L, R and A at a frequency of 32 kHz.

Since one frame contains four packets PCTA to PCTD and each packet has four channels M1 to M4, 16-channel audio signals can be simultaneously transmitted in time-division multiplexed form by the use of one signal St. Each channel is sampled at a sampling frequency of 32 kHz and encoded in 8 bits, so that it complies with the PCM audio standard of an 8 mm VTR.

Data signals from the ROMs 9a to 9h are converted into a time-division multiplexed bit sequence signal by the signal processing circuit 10 (shown in Figures 1 and 4). The time-division multiplexed signal output from the circuit 10 is used as one channel of the 16-channel signals. The signal output from the circuit 10 is cyclic, so that when the last bit of data from the ROMs 9a to 9h has been transmitted, the first bit of the data is retransmitted.

Each channel of the Figure 5C signal is formed of eight bits, and eight ROMs 9a to 9h are provided. Accordingly, in the channel for transmitting data from the ROMs 9a to 9h, each of the first bit to the eighth bit of the channel corresponds to data from a different one of the ROMs 9a to 9h. Therefore, the transmission rate of data from each ROM is 32 kbps.

The four correcting codes ECCs respectively correct errors which may occur in the data packets PCTA to PCTD.

Since the signal St has a format determined as described above, the bit transmission rate thereof can be calculated as follows:
168 bits x 32 kHz ≃ 5.4 Mbps.

One half of the calculated value is the Nyquist frequency, so that the signal St can be transmitted in a video signal bandwidth.

As described above, each of the encoders 6 and 7 can time-division-multiplex sixteen channels of audio signals, and the time division-multiplexed signal can be frequency-multiplexed with other video signals.

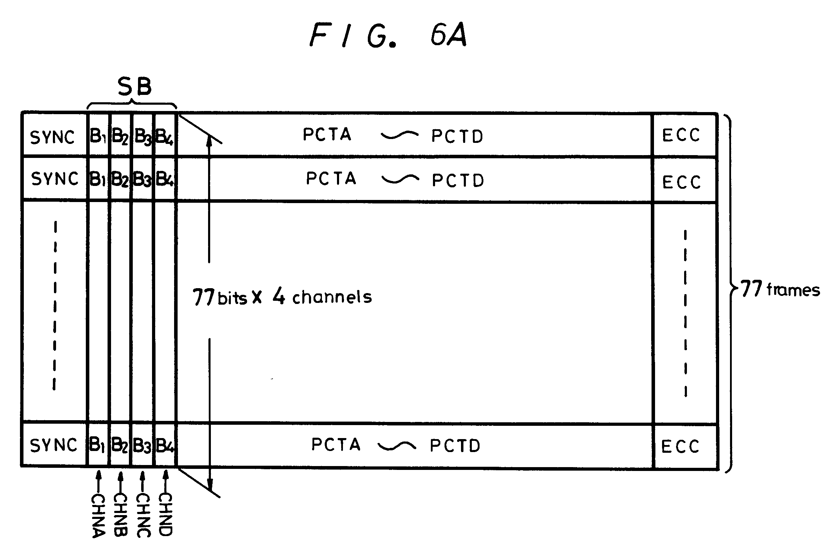

The service bits SB are preferably used in groups having a format as shown in Figures 6A to 6D. To be specific, four service bits SB are provided for every frame, and may be designated B₁ to B₄. Assuming that 77 continuous frames are vertically aligned as one group, as schematically shown in Figure 6A, the service bits SB for this group have a dimension of 77 vertical bits by 4 horizontal bits.

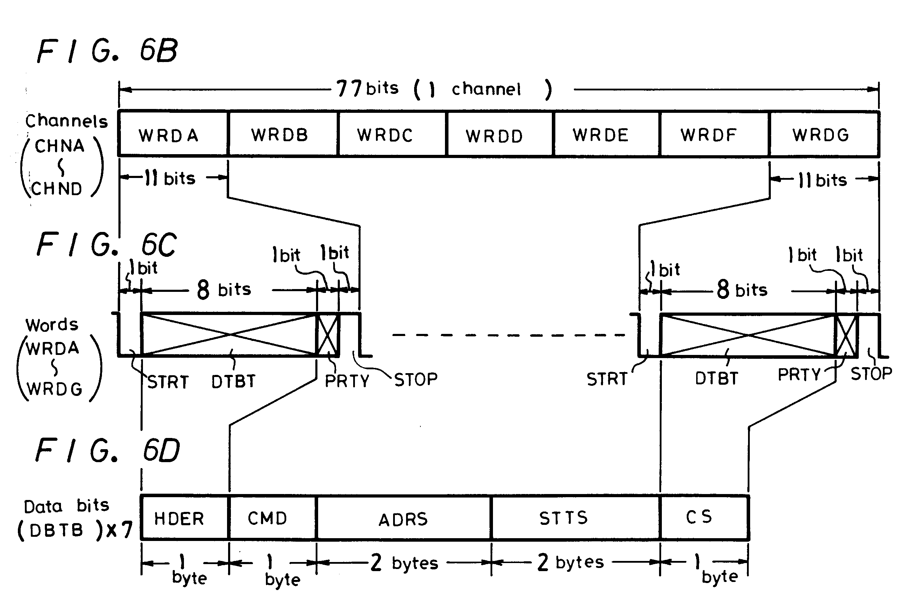

As shown in Figure 6B, the service bits SB may be vertically grouped so that each set of 77 bits is designated as one channel. A first such channel CHNA includes 77 bits B₁ and second to fourth such channels CHNB to CHND include bits B₂s to B₄s, respectively.

Each of the channels CHNA to CHND is divided into seven words WRDA to WRDG, each being formed of 11 bits as shown in Figure 6B. Each word has its first bit set to "0" level and used as a start bit STRT, the subsequent eight bits are used as data bits DTBT, the next one bit used as a parity bit PRTY, and the last one bit determined to be "0" level and used as a stop bit STOP, as shown in Figure 6C.

There is one data bit DTBT for each word in each of the channels CHNA to CHND, and there are seven words for each 77 frames. Therefore, there are seven data bits (seven bytes) for the 77 frames. Accordingly, there are 7 bytes x 4 channels of the data bits DTBTs in all.

The second channel CHNB has its first byte set in a predetermined bit pattern ("AA" in hexadecimal) and is used as a header HDER; its second byte is used as a command CMD for identifying a maximum of 256 kinds of commands; the third and fourth bytes are used as an address ADRS indicative of a seat number (or a number identifying a particular terminal unit); the fifth and sixth bytes are used as status information STTS indicative of data or parameters incident to the command CMD; and the last byte is used as a check sum CS.

The command CMD of Figure 6D represents the control data SC₁ or SC₂ from the controller 5 and the master controller 8. For example, when a terminal unit is forced into the message receiving state, the control data SC₂ for this operation is generated from the master controller 8 by operating the keyboard 82 and is transmitted as a command CMD of a signal having the Figure 6D format.

The address ADRS is arbitrarily changed by the operation of the keyboard 82, so that any or all of the terminal units may be specified.

Figure 7 shows a preferred embodiment of the invention when installed in a cabin of an aircraft. The components in Figure 7 corresponding to those in Figures 1 and 4 are designated by the same reference numerals. The disc drive 44, the printer 45 and the external communication apparatus or remote location transmitter 46 are omitted from Figure 7 for simplicity. The ROMs 9a to 9h and the signal processing circuit 10 in Figures 1 and 4 are accommodated in a box 100, and the CADA encoders 6 and 7, the modulators 11a to 11g, the adder 12 and the signal distributor 13 are accommodated in a box 200.

The above embodiments have been described for the case where the system is installed in an aircraft. The system may instead be implemented in a passenger vehicle such as a train, a bus or the like.

In the above-described embodiments, each selection and display apparatus 35 is arranged on the back of a passenger seat. Alternatively, each apparatus 35 can be mounted at the vicinity of the seat, for example, on the arm portion of the seat, on a table attached to the seat or the like.

According to embodiments of the present invention, since polling answer signals (which may indicate the status of each of the passenger seats or the condition of each passenger seated thereon) are generated at the individual terminal units and are then centralised (that is, received and either displayed or processed) at the head end apparatus, the attendant need not walk through the passenger vehicle to check each passenger seat, for example, when an aircraft is taking off or landing. Thus, the attendant's workload can be considerably alleviated. Further, the status of each passenger seat can quickly be checked by actuating keys of a keyboard at the head end apparatus, and it is possible to urge individual passengers to take proper action such as to fasten a seat belt, or the like.

Further, since the selection status of each terminal unit can be checked, the popularity of each video programme, music programme and television game software available to the passengers can be determined. Thus, popular programmes and games may be retained, and unpopular ones replaced with others so that service can be improved.

Furthermore, since the polling system is integrally formed as a single combined unit together with a system for providing audio and video signals to passengers, the combined system provides an expanded service with a simplified overall system arrangement.

## Claims

1. A passenger vehicle polling system comprising:
a head end apparatus comprising means (8) for generating a polling command signal (SC₂) and means for centralising polling answer signals generated in response to the polling command signal (SC₂), each said polling answer signal including a status signal and an address signal identifying one of a plurality of passenger seats;
a plurality of terminal units (30) each provided at a respective passenger seat, each passenger seat having a seat belt and being capable of reclining, each said terminal unit (30) comprising means (36) for decoding said polling command signal, means (36) for generating at least one of said polling answer signals, and a sensor means (39) capable of sensing the status of a respective one of the passenger seats and sending a status signal indicative of the sensed status to the polling answer signal generating means (36), each said sensor means (39) being operable to sense the status of the seat belt of the corresponding one of the passenger seats, to sense whether the corresponding one of the passenger seats is reclined and to sense whether the corresponding one of the passenger seats is occupied;
means (13,21,31) for transmitting the polling command signal (SC₂) from the head end apparatus to the terminal units (30), and for transmitting each polling answer signal from the terminal unit (30) at which it is generated to the head end apparatus; and
means for transmitting a safety message signal to selected ones of said terminal units (30) in response to the status signals received by said head end apparatus from said terminal units (30).

2. A system according to claim 1, in which said head end apparatus comprises means (1a to 1d) for reproducing video programmes, means (4a,4b) for reproducing audio programmes, and means (12) for multiplexing said polling command signal (SC₂), said video programmes and said audio programmes, and each terminal unit (30) comprises means (33) for receiving said video programmes and said audio programmes, channel selecting means (35) for selecting among said video programmes and said audio programmes, said channel selecting means (35) having key means (35f to 35n) and means for sending a signal indicative of the status of the key means to the polling answer signal generating means (36), means (35a) for displaying the selected video programmes, and an audio output terminal (35b) for receiving the selected audio programmes, wherein at least one of said polling answer signals is concerned with the status of the key means (35f to 35n) of one of the channel selecting means (35).

3. A system according to claim 2, in which said head end apparatus comprises memory means (9b to 9h) for storing television game software signals, wherein the multiplexing means (12) is capable of multiplexing the television game software signals with the polling command signal (SC₂), the video programmes and the audio programmes, and wherein each said terminal unit (30) comprises game selecting means (35k to 35m) for selecting desired ones of said television game software signals, said game selecting means having key means and means for sending a signal indicative of the status of the key means to said polling answer signal generating means (36), wherein at least one of said polling answer signals is concerned with the status of the key means of one of the game selecting means (35k to 35m).

4. A system according to claim 2 or claim 3, in which each terminal unit (30) includes a panel (35), and said key means (35f to 35n), said display means (35a), and said audio output terminal (35b) are provided on the panel (35).

5. A system according to claim 4, in which each said panel (35) is mounted on the rear side of a respective one of the passenger seats.

6. A system according to any one of the preceding claims, in which said head end apparatus comprises monitor means (81) for displaying the polling answer signals received from the terminal units (30).

7. A system according to claim 6, in which said head end apparatus comprises a keyboard means (82) connected to said polling command signal generating means (8), and in which the polling command signal (SC₂) is generated in response to actuation of the keyboard means (82).

8. A system according to claim 7, in which said head end apparatus is capable of generating terminal address signals (ADRS) and including said terminal address signals (ADRS) as part of said polling command signal (SC₂), each terminal unit (30) comprises means (52) for comparing said terminal address signals (ADRS) with said address signal, and wherein said polling answer signal generating means (36) is operable to generate one of said polling answer signals when said address signal is coincident with one of said terminal address signals (ADRS).

9. A passenger vehicle polling system comprising:
a head end apparatus comprising means (8) for generating a polling command signal (SC₂), means for centralising polling answer signals generated in response to the polling command signal (SC₂), means (1a to 1d) for reproducing video programmes, means (4a,4b) for reproducing audio programmes, and means (12) for multiplexing said polling command signal (SC₂), said video programmes and said audio programmes;
a plurality of terminal units (30) each provided at a respective one of a plurality of passenger seats, each passenger seat having a seat belt and being capable of reclining, each said terminal unit (30) comprising means (33,34) for receiving said polling command signal (SC₂), said video programmes, and said audio programmes, means (36) for decoding said polling command signal (SC₂), means (36) for generating at least one of said polling answer signals in response to said polling command signal (SC₂), means (53) for generating an address signal identifying one of the passenger seats and for supplying the address signal to said polling answer signal generating means (36), means (35) for selecting desired ones of said video programmes and said audio programmes and for supplying a signal indicative of the selected ones of the video programmes and audio programmes to the polling answer signal generating means (36), means (39) for sensing the status of one of the passenger seats and for supplying a signal indicative of the status of said one of the passenger seats to said polling answer signal generating means (36), each said sensing means (39) being operable to sense the status of the seat belt of the corresponding one of the passenger seats, to sense whether the corresponding one of the passenger seats is reclined and to sense whether the corresponding one of the passenger seats is occupied, display means (35a) for displaying the selected video programmes, and an audio output terminal (35b) for receiving the selected audio programmes;
means (13,21,31) for transmitting signals between said head end apparatus and said plurality of terminal units (30); and
means for transmitting a safety message signal to selected ones of said terminal units (30) in response to the status signals received by said head end apparatus from said terminal units (30).

10. A system according to claim 9, in which the head end apparatus comprises memory means (9b to 9h) for storing television game software signals, wherein the multiplexer means (12) is capable of multiplexing the television game software signals with said polling command signal (SC₂), said video programmes and said audio programmes, and each terminal unit (30) comprises means (35k to 35m) for receiving and selecting desired ones of the television game software signals, means for supplying to the polling answer signal generating means (36) a signal indicative of the selected ones of the television game software signals, and means (37) for processing the selected television games software signals.

11. A system according to any one of the preceding claims, in which said signal transmitting means comprises a cable (21).

12. A system according to any one of the preceding claims, in which the passenger vehicle is an aircraft.

13. A passenger vehicle polling method including the steps of:
generating (8) a polling command signal (SC₂) at a head end apparatus in a passenger vehicle;
transmitting (13,21,31) the polling command signal (SC₂) from the head end apparatus to each of a plurality of terminal units (30), each terminal unit being located at a respective one of a plurality of passenger seats in the passenger vehicle, each passenger seat comprising a seat belt (60) and being capable of reclining;
at each terminal unit (30), decoding (36) said polling command signal (SC₂), sensing (39) at each terminal unit (30) the status of one of said seat belts (60), sensing (39) at each terminal unit (30) whether one of said passenger seats is reclined, sensing (39) at each terminal unit (30) whether one of said passenger seats is occupied, generating in response to the decoded polling command signal (SC₂) a polling answer signal including an address signal identifying one of the passenger seats and a status signal indicative of the status of one of the passenger seats, the sensed seat belt status, the sensed seat reclined status and the sensed seat occupation status;
transmitting (13,21,31) said polling answer signals to the head end apparatus; and
transmitting a safety message signal to selected ones of said terminal units (30) in response to the status signals received by said head end apparatus from said terminal units (30).

14. A method according to claim 13, including the steps of:
at the head end apparatus, reproducing (1a to 1d) video programmes, reproducing (4a,4b) audio programmes, and generating (12) a multiplexed signal including said polling command signal (SC₂), said video programmes, and said audio programmes;
transmitting (13,21,31) the multiplexed signal from the head end apparatus to each terminal unit (30); and
at each terminal unit (30), receiving (33,34) the multiplexed signal, selecting (35) desired ones of said video programmes and said audio programmes, and generating (36) said status signal in a manner so that said status signal indicates which of the video programmes and audio programmes has been selected.

15. A method according to claim 14, including the steps of:
at the head end apparatus, storing (9b to 9h) television game software signals, and generating (12) the multiplexed signal by multiplexing said television game software signals with said video programmes and said audio programmes so that the multiplexed signal includes the polling command signal (SC₂), the video programmes, the audio at each terminal unit (30), selecting (35f to 35n) desired ones of the television game software signals, and generating (36) said status signal in a manner so that said status signal indicates which of the video programmes, audio programmes, and television game software signals has been selected.

16. A method according to any one of claims 13 to 15, including the steps of:
at the head end apparatus, generating terminal address signals (ADRS) and transmitting said terminal address signals as part of said polling command signal (SC₂); and
at each terminal unit (30), generating (53) an address signal, comparing (52) said terminal address signals (ADRS) with the address signal, and generating (36) said polling answer signal when said address signal coincides with one of said terminal address signals (ADRS).

## Patentansprüche

1. Abfragesystem für ein Passagierfahrzeug
mit einem Hauptendgerät, das Mittel (8) zur Erzeugung eines Abfrage-Steuersignals (SC₂) und Mittel zum Zentralisieren von in Abhängigkeit von dem Abfrage-Steuersignal (SC₂) erzeugten Abfrage-Antwortsignalen aufweist, wobei jedes dieser Abfrage-Antwortsignale ein Zustandssignal sowie ein Adressensignal enthält, das einen aus einer Mehrzahl von Passagiersitzen identifiziert,
mit einer Mehrzahl von Anschlußeinheiten (30),deren jede an jeweils einem der Passagiersitze angeordnet sind, von denen jeder einen Sitzgurt aufweist und in seiner Neigung verstellbar ist, wobei jede Anschlußeinheit (30) eine Dekodiereinrichtung (36) zum Dekodieren des Abfrage-Steuersignals, eine Abfrage-Antwortsignal-Generatoreinrichtung (36) zur Erzeugung wenigstens eines der genannten Abfrage-Antwortsignale sowie eine Sensoreinrichtung (39) aufweist, die den Zustand eines entsprechenden Exemplars der Passagiersitze erfassen und ein Zustandssignal an die Abfrage-Antwortsignal-Generatoreinrichtung (36) aussenden kann, das für den ermittelten Zustand kennzeichnend ist, wobei jede dieser Sensoreinrichtungen (39) so betrieben werden kann, daß sie den Zustand des Sitzgurtes des betreffenden Passagiersitzes ermittelt und ermittelt, ob die Neigung des Passagiersitzes zurückgestellt ist und ob der betreffende Passagiersitz besetzt ist,
mit Mitteln (13, 21, 31) zum Übertragen des Abfrage-Steuersignals (SC₂) von dem Hauptendgerät zu den Anschlußeinheiten (30) und zum Übertragen der einzelnen Abfrage-Antwortsignale von der Anschlußeinheit (30), in der sie erzeugt werden, zu dem Hauptendgerät,
sowie mit Mitteln zum Übertragen eines Sicherheits-Nachrichtensignals zu ausgewählten Exemplaren der Anschlußeinheiten (30) in Abhängigkeit von den durch das Hauptendgerät von den Anschlußeinheiten (30) empfangenen Zustandssignalen.

2. System nach Anspruch 1, bei dem das Hauptendgerät Mittel (1a bis 1d) zur Wiedergabe von Videoprogrammen, Mittel (4a, 4b) zur Wiedergabe von Audioprogrammen und eine Multiplexeinrichtung (12) zum Multiplexen des Abfrage-Steuersignals (SC₂), der Videoprogramme und der Audioprogramme aufweist, und bei dem jede Anschlußeinheit (30) Mittel (33) für den Empfang der Videoprogramme und der Audioprogramme, eine Kanalwahl-Einrichtung (35) zur Auswahl der genannten Video- und Audioprogramme mit einer Tastatur (35f bis 35n) und Mittel zum Aussenden eines den Zustand der Tastatur kennzeichnenden Signals zu der Abfrage-Antwortsignal-Generatoreinrichtung (36), ferner Mittel (35a) zum Anzeigen der ausgewählten Videoprogramme sowie einen Audio-Ausgang (35b) zum Empfangen der ausgewählten Audioprogramme aufweist, wobei wenigstens eines der Abfrage-Antwortsignale den Zustand der Tastatur (35f bis 35n) einer der Kanalwahl-Einrichtungen (35) betrifft.

3. System nach Anspruch 2, bei dem das Hauptendgerät Speichermittel (9b bis 9h) zum Speichern von Videospiel-Softwaresignalen aufweist, wobei die Multiplexeinrichtung (12) die Videospiel-Softwaresignale mit dem Abfrage-Steuersignal (SC₂), den Videoprogrammen und den Audioprogrammen multiplexen kann und wobei jede der genannten Anschlußeinheiten (30) eine Spiele-Auswahleinrichtung (35k bis 35m) zur Auswahl gewünschter Exemplare der Videospiel-Softwaresignale und die Spiele-Auswahleinrichtung eine Tastatur und Mittel zum Aussenden eines den Zustand der Tastatur kennzeichnenden Signals an die Abfrage-Antwortsignal-Generatoreinrichtung (36) aufweist, und wobei wenigstens eines der Abfrage-Antwortsignale den Zustand der Tastatur einer der Spiele-Auswahleinrichtungen (35k bis 35m) betrifft.

4. System nach Anspruch 3, bei dem jede Anschlußeinheit (30) ein Bedienungspult (35) besitzt und bei dem die Tastatur (35f bis 35n), die Anzeigeeinrichtung (35a) und der Audioausgang (35b) an diesem Bedienungspult (35) angeordnet sind.

5. System nach Anspruch 4, bei dem die einzelnen Bedienungspulte (35) auf der Rückseite jeweils eines der Passagiersitze montiert sind.

6. System nach einem der vorhergehenden Ansprüche, bei dem das Hauptendgerät einen Monitor (81) zur Anzeige der von den Anschlußeinheiten (30) empfangenen Abfrage-Antwortsignale umfaßt.

7. System nach Anspruch 6, bei dem das Hauptendgerät eine Tastatur (82) umfaßt, die mit den Mitteln (8) zur Erzeugung des Abfrage-Steuersignals verbunden ist, und bei dem das Abfrage-Steuersignal (SC₂) in Abhängigkeit von der Betätigung dieser Tastatur (82) erzeugt wird.

8. System nach Anspruch 7, bei dem das Hauptendgerät Adressensignale (ADRS) erzeugen und als Teil des Abfrage-Steuersignals (SC₂) in dieses einfügen kann, wobei jede Anschlußeinheit (30) Mittel (52) zum Vergleichen dieser Endgeräte-Adressensignale (ADRS) mit dem genannten Adressensignalen aufweist, und bei dem die Abfrage-Antwortsignal-Generatoreinrichtung (36) so betrieben werden kann, daß sie eines der Abfrage-Antwortsignale erzeugt, wenn das genannte Adressensignal mit einem der Endgeräte-Adressensignale (ADRS) übereinstimmt.

9. Abfragesystem für ein Passagierfahrzeug
mit einem Hauptendgerät mit Mitteln (8) zur Erzeugung eines Abfrage-Steuersignals (SC₂), Mitteln zum Zentralisieren von in Abhängigkeit von dem Abfrage-Steuersignal (SC₂) erzeugten Abfrage-Antwortsignalen, Mitteln (1a bis 1d) zur Wiedergabe von Videoprogrammen, Mitteln (4a, 4b) zur Wiedergabe von Audioprogrammen und einer Multiplexeinrichtung (12) zum Multiplexen des Abfrage-Steuersignals (SC₂), der Videoprogramme und der Audioprogramme,
mit einer Mehrzahl von Anschlußeinheiten (30), deren jede an jeweils einem der Passagiersitze angeordnet ist, wobei jeder Passagiersitz einen Sitzgurt aufweist und in seiner Neigung verstellbar ist und wobei jede Anschlußeinheit (30) folgende Teile umfaßt: Mittel (33, 34) zum Empfangen des Abfrage-Steuersignals (SC₂), der Videoprogramme und der Audioprogramme ferner Mittel (36) zum Dekodieren des Abfrage-Steuersignals (SC₂), eine Abfrage-Antwortsignal-Generatoreinrichtung (36) zur Erzeugung wenigstens eines der genannten Abfrage-Antwortsignale in Abhängigkeit von dem Abfrage-Steuersignal (SC₂), Mittel (53) zur Erzeugung eines Adressensignals, das einen der Passagiersitze identifiziert, und zur Lieferung dieses Adressensignals an die Abfrage-Antwortsignal-Generatoreinrichtung (36), Mittel (35) zur Auswahl gewünschter Videoprogramme und Audioprogramme und zur Lieferung eines die ausgewählten Videoprogramme und Audioprogramme kennzeichnenden Signals an die Abfrage-Antwortsignal-Generatoreinrichtung (36), Sensormittel (39) zur Ermittlung des Zustands eines der Passagiersitze und zur Lieferung eines den Zustand dieses Passagiersitzes kennzeichnenden Signals an die Abfrage-Antwortsignal-Generatoreinrichtung (36), wobei jede dieser Sensoreinrichtungen (39) so betrieben werden kann, daß sie den Zustand des Sitzgurtes des betreffenden Passagiersitzes ermittelt und ermittelt, ob die Neigung des Passagiersitzes zurückgestellt ist und ob der betreffende Passagiersitz besetzt ist, ferner Anzeigemittel (35) zur Anzeige der ausgewählten Videoprogramme sowie einen Audioausgang (35b) zum Empfangen der ausgewählten Audioprogramme,
mit Mitteln (13, 21, 31) zum Übertragen von Signalen zwischen dem Hauptendgerät und der genannten Mehrzahl von Anschlußeinheiten (30)
sowie mit Mitteln zum Übertragen eines Sicherheits-Nachrichtensignals zu ausgewählten Exemplaren der Anschlußeinheiten (30) in Abhängigkeit von den Zustandssignalen, die das Hauptendgerät von den Anschlußeinheiten (30) empfängt.

10. System nach Anspruch 9, bei dem das Hauptendgerät Speichermittel (9b bis 9h) zum Speichern von Videospiel-Softwaresignalen aufweist, wobei die Multiplexeinrichtung (12) diese Videospiel-Softwaresignale mit dem Abfrage-Steuersignal (SC₂), den Videoprogrammen und den Audioprogrammen multiplexen kann und wobei jede der genannten Anschlußeinheiten (30) aufweist: eine Spiele-Auswahleinrichtung (35k bis 35m) zum Auswählen gewünschter Exemplare der Videospiel-Softwaresignale, ferner Mittel zur Lieferung eines die ausgewählten Exemplare der Videospiel-Softwaresignale kennzeichnenden Signals an die Abfrage-Antwortsignal-Generatoreinrichtung (36) sowie Mittel (37) zur Verarbeitung der ausgewählten Videospiel-Softwaresignale.

11. System nach einem der vorhergehenden Ansprüche, bei dem die genannten Übertragungsmittel ein Kabel (21) umfassen.

12. System nach einem der vorhergehenden Ansprüche, bei dem das Passagierfahrzeug ein Flugzeug ist.

13. Abfrageverfahren für ein Passagierfahrzeug mit folgenden Verfahrensschritten:
- in einem Passagierfahrzeug wird in einem Hauptendgerät ein Abfrage-Steuersignal (SC₂) erzeugt (8),
- das Abfrage-Steuersignal (SC₂) wird von dem Hauptendgerät zu jeder aus einer Mehrzahl von Anschlußeinheiten (30) übertragen (13, 21, 31), wobei jede dieser Anschlußeinheiten an jeweils einem entsprechenden Exemplar einer Mehrzahl von Passagiersitzen in dem Passagierfahrzeug angeordnet ist und jeder dieser Passagiersitze einen Sitzgurt (60) aufweist und in seiner Neigung verstellbar ist,
- in jeder Anschlußeinheit (30) wird
- - das Abfrage-Steuersignal (SC₂) dekodiert (36)
- - der Zustand eines der Sitzgurte (60) ermittelt (39),
- - ermittelt (39), ob einer der Passagiersitze in seiner Neigung verstellt ist,
- - ermittelt (39), ob einer der Passagiersitze besetzt ist, und
- - in Abhängigkeit von dem dekodierten Abfrage-Steuersignal (SC₂) ein Abfrage-Antwortsignal erzeugt, das ein Adressensignal enthält, das den betreffenden Passagiersitz identifiziert sowie ein Zustandssignal, das für den Zustand des betreffenden Passagiersitzes, den ermittelten Zustand des Sitzgurts, den ermittelten Zustand der Neigungsverstellung des Sitzes und den ermittelten Besetztzustand des Sitzes kennzeichnend ist,
- das Abfrage-Antwortsignal wird zu dem Hauptendgerät übertragen (13, 21, 31) und
- in Abhängigkeit von den durch das Hauptendgerät von den Anschlußeinheiten (30) empfangenen Zustandssignalen wird ein Sicherheits-Nachrichtensignals zu ausgewählten Exemplaren der Anschlußeinheiten (30) übertragen.

14. Verfahren nach Anspruch 13 mit folgenden Verfahrensschritten:
in dem Hauptendgerät werden Videoprogramme wiedergegeben (1a bis 1d), Audioprogramme wiedergegeben (4a, 4b) und ein Multiplexsignal erzeugt (12), welches das Abfrage-Steuersignal (SC₂), die Videoprogramme und die Audioprogramme enthält,
das Multiplexsignal wird von dem Hauptendgerät zu jeder der Anschlußeinheiten (30) übertragen (13, 21, 31) und
in jeder Anschlußeinheit (30) wird das Multiplexsignal empfangen (33, 34), ein gewünschtes Exemplar aus den Videoprogrammen und den Audioprogrammen ausgewählt (35) und das genannte Zustandssignal in der Weise erzeugt (36), daß es angibt, welches der Videoprogramme und Audioprogramme ausgewählt wurde.

15. Verfahren nach Anspruch 14 mit folgenden Verfahrensschritten:
in dem Hauptendgerät werden Videospiel-Softwaresignale gespeichert (9b bis 9h) und es wird das Multiplexsignal erzeugt (12), indem eine Multiplexbildung des Videospiel-Softwaresignale mit den Videoprogrammen und den Audioprogrammen durchgeführt wird, so daß das Multiplexsignal das Abfrage-Steuersignal (SC₂), die Videoprogramme und die Audioprogramme enthält,
in jeder Anschlußeinheit (30) werden gewünschte Exemplare der Videospiel-Softwaresignale ausgewählt (35f bis 36n) und das genannte Zustandssignal wird in der Weise erzeugt (36), daß es angibt, welches der Videoprogramme, Audioprogramme und Videospiel-Softwaresignale ausgewählt wurde.

16. Verfahren nach einem der Ansprüche 13 bis 15 mit folgenden Verfahrensschritten:
in dem Hauptendgerät werden Endgeräte-Adressensignale (ADRS) erzeugt und als Teil des Abfrage-Steuersignals (SC₂) ausgesendet, und
in jeder Anschlußeinheit (30) wird ein Adressensignal erzeugt (53), werden die Endgeräte-Adressensignale (ADRS) mit diesem Adressensignal verglichen und es wird das Abfrage-Antwortsignal erzeugt (36), wenn das Adressensignal mit einem der Endgeräte-Adressensignale (ADRS) übereinstimmt.

## Revendications

1. Système d'interrogation pour véhicules à passagers comprenant :
un appareil de commande comprenant un moyen (8) pour produire un signal d'instruction d'interrogation (SC₂) et un moyen pour centraliser des signaux de réponse à une interrogation produits en réponse au signal d'instruction d'interrogation (SC₂), chacun desdits signaux de réponse à une interrogation incluant un signal d'état et un signal d'adresse identifiant l'un d'une pluralité de sièges pour passager;
une pluralité de terminaux (30) chacun disposé au droit d'un siège pour passager respectif, chaque siège pour passager comportant une ceinture de sécurité et pouvant être incliné, chacun desdits terminaux (30) comprenant un moyen (36) pour décoder ledit signal d'instruction d'interrogation, un moyen générateur (36) pour produire au moins un desdits signaux de réponse à une interrogation, et des moyens détecteurs (39) capables de détecter l'état de l'un respectif des sièges pour passager et d'envoyer, vers le moyen (36) générateur de signaux de réponse à une interrogation, un signal d'état indiquant l'état détecté, chacun desdits moyens détecteurs (39) servant à détecter l'état de la ceinture de sécurité de celui des sièges pour passager correspondant, à détecter si celui des sièges pour passager correspondant est incliné, et à détecter si celui des sièges pour passager correspondant est occupé ;
un moyen (13, 21, 31) pour transmettre le signal d'instruction d'interrogation (SC₂) de l'appareil de commande vers les terminaux (30), et pour transmettre chacun des signaux de réponse à une interrogation de chaque terminal (30) où il est produit vers l'appareil de commande ; et,
un moyen pour transmettre un signal de message de sécurité vers ceux sélectionnés desdits terminaux (30) en réponse aux signaux d'état reçus desdits terminaux (30) par ledit appareil de commande.

2. Système selon la revendication 1, dans lequel ledit appareil de commande comprend des moyens (1a à 1d) pour reproduire des programmes vidéo, des moyens (4a, 4b) pour reproduire des programmes audio, et un moyen (12) pour multiplexer ledit signal d'instruction d'interrogation (SC₂), lesdits programmes vidéo et lesdits programmes audio, et dans lequel chaque terminal (30) comprend un moyen (33) pour recevoir lesdits programmes vidéo et lesdits programmes audio, un moyen de sélection de canal (35) pour faire une sélection parmi lesdits programmes vidéo et lesdits programmes audio, ledit moyen de sélection de canal (35) comportant des moyens de manipulation (35f à 35n) et des moyens pour envoyer un signal indicatif de l'état des moyens de manipulation au moyen générateur de signal de réponse à une interrogation (36), un moyen (35a) pour afficher les programmes vidéo sélectionnés, et une borne de sortie audio (35b) pour recevoir les programmes audio sélectionnés, dans lequel au moins l'un desdits signaux de réponse à une interrogation concerne l'état des moyens de manipulation (35f à 35n) de l'un des moyens de sélection de canal (35).

3. Système selon la revendication 2, dans lequel ledit appareil de commande comprend des moyens de mémorisation (9b à 9h) pour mémoriser des signaux de logiciels de jeux vidéo, dans lequel le moyen de multiplexage (12) est capable de multiplexer les signaux de logiciels de jeux vidéo avec le signal d'instruction d'interrogation (SC₂), les programmes vidéo et les programmes audio, et dans lequel chacun desdits terminaux (30) comprend un moyen de sélection de jeux (35k à 35m) pour sélectionner ceux souhaités parmi lesdits signaux de logiciels de jeux vidéo, ledit moyen de sélection de jeux comportant des moyens de manipulation et des moyens pour envoyer un signal indicatif de l'état des moyens de manipulation audit moyen générateur de signal de réponse à une interrogation (36), dans lequel au moins l'un desdits signaux de réponse à une interrogation concerne l'état des moyens de manipulation de l'un des moyens de sélection de jeu (35k à 35m).

4. Système selon la revendication 2 ou la revendication 3, dans lequel chaque terminal (30) comprend un tableau (35), et dans lequel lesdits moyens de manipulation (35f à 35n), ledit moyen d'affichage (35a), et ladite borne de sortie audio (35b) sont disposés sur le tableau (35).

5. Système selon la revendication 4, dans lequel chacun desdits tableaux (35) est monté au dos de l'un respectif des sièges pour passager.

6. Système selon l'une quelconque des revendications précédentes, dans lequel ledit appareil de commande comprend un moyen de surveillance (81) pour afficher les signaux de réponse à une interrogation reçus des terminaux (30).

7. Système selon la revendication 6, dans lequel ledit appareil de commande comprend un moyen de manipulation (82) relié audit moyen générateur de signal d'instruction d'interrogation (8) et dans lequel le signal d'instruction d'interrogation (SC₂) est produit en réponse à la manipulation du moyen de manipulation (82).

8. Système selon la revendication 7, dans lequel ledit appareil de commande peut produire des signaux d'adresse de terminal (ADRS) et d'inclure lesdits signaux d'adresse de terminal (ADRS) comme partie dudit signal d'instruction d'interrogation (SC₂) dans lequel chaque terminal (30) comprend un moyen (52) pour comparer lesdits signaux d'adresse de terminal (ADRS) avec ledit signal d'adresse, et dans lequel ledit moyen générateur de signal de réponse à une interrogation (36) sert à produire l'un desdits signaux de réponse à une interrogation lorsque ledit signal d'adresse coïncide avec l'un desdits signaux d'adresse de terminal (ADRS).

9. Système d'interrogation pour véhicules à passagers comprenant :
un appareil de commande comprenant un moyen (8) pour produire un signal d'instruction d'interrogation (SC₂) et un moyen pour centraliser des signaux de réponse à une interrogation produits en réponse au signal d'instruction d'interrogation (SC₂), un moyen (1a à 1d) pour reproduire des programmes vidéo, un moyen (4a, 4b) pour reproduire des signaux audio, et un moyen (12) pour multiplexer lesdits signaux d'instruction d'interrogation (SC₂), lesdits programmes vidéo et lesdits programmes audio ;
une pluralité de terminaux (30) chacun disposé au droit de l'un respectif d'une pluralité de sièges pour passager, chaque siège pour passager comportant une ceinture de sécurité et pouvant être incliné, chacun desdits terminaux (30) comprenant un moyen (33, 34) pour recevoir ledit signal d'instruction d'interrogation (SC₂), lesdits programmes vidéo et lesdits programmes audio, un moyen (36) pour décoder ledit signal d'instruction d'interrogation (SC₂), un moyen générateur (36) pour produire au moins un desdits signaux de réponse à une interrogation en réponse audit signal d'instruction d'interrogation (SC₂), un moyen (53) pour produire un signal d'adresse identifiant l'un des sièges pour passager et pour délivrer le signal d'adresse audit moyen (36) générateur de signal de réponse à une interrogation, un moyen (35) pour sélectionner ceux souhaités desdits programmes vidéo et desdits programmes audio et pour délivrer un signal indicatif de ceux sélectionnés des programmes vidéo et des programmes audio au moyen (36) générateur de signal de réponse à une interrogation, des moyens détecteurs (39) pour détecter l'état de l'un des sièges pour passager et pour délivrer un signal indicatif de l'état dudit un des sièges pour passager audit moyen (36) générateur de signal de réponse à une interrogation, chacun desdits moyens détecteurs (39) servant à détecter l'état de la ceinture de sécurité de celui des sièges pour passager correspondant, à détecter si celui des sièges pour passager correspondant est incliné, et à détecter si celui des sièges pour passager correspondant est occupé, un moyen d'affichage (35a) pour afficher les programmes vidéo sélectionnés, et une borne de sortie audio (35b) pour recevoir les programmes audio sélectionnés ;
un moyen (13, 21, 31) pour transmettre les signaux entre ledit appareil de commande et ladite pluralité de terminaux (30) ; et,
un moyen pour transmettre un signal de message de sécurité vers ceux sélectionnés desdits terminaux (30) en réponse aux signaux d'état reçus desdits terminaux (30) par ledit appareil de commande.

10. Système selon la revendication 9, dans lequel ledit appareil de commande comprend des moyens de mémorisation (9b à 9h) pour mémoriser des signaux de logiciels de jeux vidéo, dans lequel le moyen multiplexeur (12) est capable de multiplexer les signaux de logiciels de jeux vidéo avec ledit signal d'instruction d'interrogation (SC₂), dans lequel chaque terminal (30) comprend des moyens (35k à 35m) pour recevoir et sélectionner ceux souhaités parmi les signaux de logiciels de jeux vidéo, un moyen pour délivrer au moyen (36) générateur de signal de réponse à une interrogation un signal indicatif de ceux des signaux de logiciels de jeux vidéo qui ont été sélectionnés, et un moyen (37) pour traiter les signaux de logiciels de jeux vidéo sélectionnés.

11. Système selon l'une quelconque des revendications précédentes, dans lequel ledit moyen d'émission de signal comprend un câble (21).

12. Système selon l'une quelconque des revendications précédentes, dans lequel le véhicule à passagers est un aéronef.

13. Procédé d'interrogation pour véhicules à passagers incluant les étapes de :
production (8) d'un signal d'instruction d'interrogation (SC₂) au droit d'un appareil de commande dans un véhicule à passagers ;
transmission (13, 21, 31) du signal d'instruction d'interrogation (SC₂) de l'appareil de commande à chacun d'une pluralité de terminaux (30), chaque terminal étant situé au droit de l'un respectif d'une pluralité de sièges pour passager dans le véhicule à passagers, chaque siège pour passager comprenant une ceinture de sécurité (60) et pouvant être incliné ;
au droit de chaque terminal (30), décodage (36) dudit signal d'instruction d'interrogation (SC₂), détection (39) au droit de chaque terminal (30) de l'état de l'une desdites ceintures de sécurité (60), détection (39) au droit de chaque terminal (30) du fait que l'un desdits sièges pour passager est incliné, détection (39) au droit de chaque terminal (30) du fait que l'un desdits sièges pour passager est occupé, production en réponse au signal d'instruction d'interrogation (SC₂) décodé d'un signal de réponse à une interrogation incluant un signal d'adresse identifiant l'un des sièges pour passager et un signal d'état indicatif de l'état de l'un des sièges pour passager, l'état détecté de la ceinture de sécurité, l'état détecté d'inclinaison du siège et l'état détecté d'occupation du siège ;
transmission (13, 21, 31), audit appareil de commande, desdits signaux de réponse à une interrogation ; et
transmission d'un signal de message de sécurité à certains sélectionnés desdits terminaux (30) en réponse aux signaux d'états reçus desdits terminaux (30) par ledit appareil de commande.

14. Procédé selon la revendication 13, incluant les étapes de :
au droit de l'appareil de commande, reproduction (1a à 1d) de programmes vidéo, reproduction (4a, 4b) de programmes audio, production (12) d'un signal multiplexé incluant ledit signal d'instruction d'interrogation (SC₂) lesdits programmes vidéo et lesdits programmes audio ;
transmission (13, 21, 31) du signal multiplexé dudit appareil de commande vers chaque terminal (30) ; et,
au droit de chaque terminal (30), réception (33, 34) du signal multiplexé, sélection (35) de ceux souhaités desdits programmes vidéo et desdits programmes audio et production (36) dudit signal d'état de telle manière que ledit signal d'état indique lesquels des programmes vidéo et des programmes audio ont été sélectionnés.

15. Procédé selon la revendication 14, incluant les étapes de :
au droit de l'appareil de commande, mémorisation (9b à 9h) de signaux de logiciels de jeux vidéo, et production (12) du signal multiplexé en multiplexant lesdits signaux de logiciels de jeux vidéo avec lesdits programmes vidéo et lesdits programmes audio de sorte que le signal multiplexé comprend le signal d'instruction d'interrogation (SC₂), les programmes vidéo, les programmes audio et les signaux de logiciels de jeux vidéo ;
au droit de chaque terminal (30), sélection (35f, 35n) de ceux souhaités parmi les signaux de logiciels de jeux vidéo et production (36) dudit signal d'état de telle manière que ledit signal d'état indique lequel des programmes vidéo, des programmes audio et des signaux de logiciels de jeux vidéo a été sélectionné.

16. Procédé selon l'une quelconque des revendications 13 à 15, incluant les étapes de :
au droit de l'appareil de commande, production de signaux d'adresse de terminal (ADRS) et émission desdits signaux d'adresse de terminal comme partie dudit signal d'instruction d'interrogation (SC₂) ; et,
au droit de chaque terminal (30), production (53) d'un signal d'adresse, comparaison (52) desdits signaux d'adresse de terminal (ADRS) avec le signal d'adresse, et production (36) dudit signal de réponse à une interrogation lorsque ledit signal d'adresse coïncide avec l'un desdits signaux d'adresse (ADRS).
